# EUROPEAN PATENT APPLICATION

(11) **EP 1 938 694 A1**
(43) Date of publication of application: **02.07.2008**
(21) Application number: 07115675.6
(22) Date of filing: 04.09.2007
(51) Int. Cl.: A23C 9/142, A23C 19/05

(54) **Method of producing concentrated liquid dairy products**

(30) Priority: 27.12.2006 US 616428
(71) Applicant: KRAFT FOODS HOLDINGS, INC., Northfield, Illinois 60093 (US)
(72) Inventor: Hestekin, Jamie Allen, Fayetteville, AR 72703 (US); Galer, Chad David, Glenview, IL 60025 (US)
(74) Representative: Smaggasgale, Gillian Helen

(57) **Abstract**

A method is provided for forming aseptic or substantially aseptic concentrated dairy liquid, such as dairy milk, without significant heat treatment. In one form, the method first concentrates a starting dairy milk to about 2X to about 7X concentration using an ultrafiltration membrane to form a dairy concentrate. Thereafter, the dairy concentrate is filtered using a microfiltration membrane to provide the aseptic or substantially aseptic concentrated dairy milk. The resultant concentrated dairy milk has less than about 0.5 percent total bacteria and less than about 5 colony forming units of spore forming bacteria per gram. The substantially aseptic concentrated dairy milk is not subjected to significant heat treatment during processing.

## Description

### FIELD OF THE INVENTION

The invention relates to methods of producing concentrated liquid dairy products, and in particular, a method of producing aseptic or substantially aseptic concentrated liquid dairy products without significant heat treatment. In another form, the invention also relates to concentrated liquid dairy products and in particular, aseptic or substantially aseptic concentrated liquid dairy products obtained without significant heat treatment.

### BACKGROUND OF THE INVENTION

The concentration of liquid dairy products, such as milk, is often desired because it allows for reduced volumes to be stored and transported, thereby resulting in decreased storage and shipping costs. Liquid dairy concentrates also permit packaging and use of the dairy products in more efficient ways. For example, with the popularity of on-demand beverage systems that provide single servings of hot and cold beverages, concentrated forms of beverages are often utilized in a cartridge or pod to provide regular strength beverages when diluted by the beverage system. Concentration of dairy milk is such an example typically used with on-demand beverage systems to provide lattes, cappuccinos, and other hot and cold beverages. In other examples, concentrated milk products are used as intermediate raw materials for the production of other dairy products, such as flavor components or cultured cheese concentrates, such as those intermediates described in U.S. Patent No. 6,406,724, which is incorporated herein in its entirety. There are, of course, other uses for concentrated dairy products.

The production of organoleptically-pleasing, highly concentrated dairy milk can be difficult because the concentration of milk creates stability problems upon high temperature processing that the concentrate must undergo to render it biologically stable. For instance, dairy milk that has been concentrated at least three fold (3X) based on the level of protein has a tendency to undergo protein denaturation, coagulation, gelation, exhibit browning, and/or precipitate protein during its subsequent thermal processing. Additionally, such concentrated milk also has a tendency to separate and form gels over time as the product ages, thereby limiting the usable shelf life of the product. Concentrated dairy milk, as a result, is generally limited to a concentration of about 2.5X to 3X or less and has about 25 percent or less total solids, about 9 percent or less protein, and a shelf life of less than about 3 to about 6 months.

A typical method of producing concentrated milk involves heat treatments in combination with the concentration of the milk. For example, one method involves first standardizing the milk to a desired ratio of solids to fat, and then forewarming the milk to reduce the possibility of milk casein from coagulating during later high temperature processing. The forewarmed milk is then concentrated by evaporation, ultrafiltration, or other appropriate methods to the desired concentration. Thereafter, the milk is often homogenized, cooled, restandardized, and packaged. Either before or after packaging, the product must be rendered biologically stable through high temperature processing (e.g., retorting) that subjects the milk to high temperatures for short periods of time (e.g., about 135°C or higher for a few seconds). Unfortunately, such thermal processing of highly concentrated dairy milks (greater than about 3X concentrations based on protein) often results in the undesired coagulation, gelling, browning, and/or protein precipitation discussed above.

One attempt to minimize the undesired effects of thermal processing on highly concentrated dairy milk is to blend stabilizers or other additives into the concentrated milk to keep the protein solubilized and minimize browning. For instance, concentrated milk has been prepared using calcium-binding buffers (disodium phosphate, dipotassium phosphate, disodium citrate, trisodium citrate, EDTA, aqueous solutions of citric acid and tri-sodium citrate, and the like), sugars, and other stabilizers (sodium hexametaphosphate, carrageenan, and the like). See, e.g., U.S. Patent No. 7,026,004; U.S. Patent Publication No. 2003/0054079 A1; U.S. Patent Publication No. 2001/0026825 A1; Udabage et al., "Effects of Mineral Salts and Calcium Chelating Agents on the Gelation of Renneted Skim Milk," J. Dairy Sci., 84:1569-1575 (2001); Harwalkar et al., "Effect of Added Phosphates and Storage on Changes in Ultra-High Temperature Show Time Sterilized Concentrated Skim Milk. 1. Viscosity, Gelation, Alcohol Stability, Chemical and Electrophoretic Analysis of Proteins," Neth. Milk Dairy J. 32: 94-111 (1978); McMahon et al., "Effects of Phosphate and Citrate on the Gelation Properties of Casein Micelles in Renneted Ultra-high Temperature (UHT) Sterilized Concentrated Milk," Food Structure, 10:27-36 (1991).

The addition of stabilizers and other additives to improve the stability of highly concentrated milk has a number of disadvantages. The additional ingredients may impart undesired organoleptic characteristics or provide unwanted mouthfeel to the concentrate or reconstituted milk. The additional ingredients may also increase the processing and handling costs of the concentrated milk. If the concentrated milk is used as an intermediate raw material, the additives and stabilizers may limit the subsequent use of the concentrate. For example, if the milk concentrate is used in cheese making, the use of additives may prevent the milk from coagulating into a firm gel or may otherwise interfere with the fermentation. See, for example, McMahon et al., Food Structure, 10:27-36 (1991).

Rather than using thermal methods to sterilize and concentrate liquid dairy products, filtration has also been used to remove bacteria and concentrate liquid dairy products. Such sterilization and concentration filtration techniques employ a staged filtration process that first sterilizes and then concentrates the liquid dairy product. For optimal flux rates, the filter pore sizes are staged from a larger pore size (such as a microfiltration membrane) to first sterilize followed by a more narrow pore size (such as an ultrafiltration membrane) to concentrate. For example, U.S. Patent No. 6,051,268 discloses a typical method of staged filtration using a 0.8 micron filter to first separate a cream retentate from a skim milk permeate; then, a 0.4 micron filter to separate bacteria from the skim milk permeate; and then, a 0.05 to 0.2 micron filter to concentrate the casein proteins from the milk serum permeate. The method continues on with smaller and smaller filters to isolate a particular molecule of interest. In such filtration methods, larger filtration membranes are used prior to smaller filtration membranes to remove large particulates that can foul or cake the subsequent smaller filter membranes.

Accepted filtration practices, however, can not ensure that the resulting liquid dairy concentrate is sufficiently aseptic for subsequent processing, such as packaging or fermentation. As discussed above, common filtration techniques first sterilize a liquid dairy product using a microfiltration membrane (larger filter) and then concentrate the product with an ultrafiltration membrane (smaller filter). Unfortunately, ultrafiltration membranes cannot be thermally or chemically treated to render them sterile. Ultrafiltation, therefore, cannot be completed under aseptic conditions. As a result, liquid dairy products that are ultrafiltered can become re-contaminated during the ultrafiltration step and thus require additional thermal treatment prior to subsequent processing (such as packaging or fermentation for example) to render them biologically stable. As shown in the examples, for instance, it has been observed that bacterial contamination can increase by a factor of at least about 4 after ultrafiltration, which necessitates significant heat treatment before any further use. In addition, it is not uncommon to experience a seven-fold increase in bacterial contaimination after ultrafiltration. Therefore, commonly accepted filtration techniques to provide a highly concentrated dairy product do not overcome the shortcomings discussed above because thermal treatment is still needed to provide an aseptic or substantially aseptic concentrate.

Accordingly, there remains a need for methods of producing aseptic or substantially aseptic concentrated liquid dairy products, such as concentrated milk, without significant heat treatments. The present invention provides such methods.

### SUMMARY

Methods of providing aseptic or substantially aseptic concentrated dairy liquids, such as dairy milk, without significant heat treatment are provided using filtration techniques to both concentrate and sterilize the product. In one form, the methods include first concentrating a starting dairy liquid that has about 3.0 to about 3.8 percent protein using an ultrafiltration membrane to about 2X to about 7X concentration (based on the level of protein) to provide a dairy concentrate having about 6 to about 26 percent protein. Next, the dairy concentrate is filtered using a microfiltration membrane suitable for removing bacteria and/or bacterial spores, thereby providing the aseptic or substantially aseptic concentrated dairy liquid comprising about 6 to about 26 percent protein. The method preferably provides a concentrated dairy liquid having at least a four-log reduction in total bacteria and less than about 5 colony forming units of spore forming bacteria per gram without significant heat treatment to achieve such aseptic conditions. Moreover, it is expected that the about 2X to about 7X aseptic or substantially aseptic concentrated dairy liquids formed by the methods described herein are expected to be non-gelling and stable for at least 6 months at cold or ambient storage conditions (i.e., about 40°F or about 70°F) without using stabilizers and other additives to enhance the stability.

The methods herein are advantageous because they can be used to produce about 2X to about 7X concentrated dairy milk that does not require exposure to significant heat treatment, added stabilizers, or other additives to render the concentrates aseptic or substantially aseptic and stable. In fact, no significant heat treatment as defined herein is used in the process, and additives or other stabilizers are preferably not used to render the product stable. As a result, the concentrated dairy milk is substantially free of the undesired effects that significant heat treatment may impart thereto and is generally not limited in its subsequent processing because added stabilizers or other additives are not required.

One preferred use of the aseptic or substantially aseptic concentrated dairy milk is as an intermediary in cheese making, and in particular, the production of cultured cheese concentrates. For example, the aseptic or substantially aseptic concentrated dairy milk can be fermented using *Brevibacterium linens* at a pH of about 5.5 to about 8.0 and at about 86 to about 95°F to form a biogenerated flavor component having sulfur flavor notes. Such a flavor component may be used to form cheddar cheese, for example. In another use, it is expected that the aseptic or substantially aseptic dairy milk remains sufficiently stable and non-gelling for at least 6 months and, therefore, can also be used in cartridges or pods configured for on-demand beverage systems. Other uses and applications of the aseptic or substantially aseptic concentrated dairy milk are, of course, possible.

There is also provided an aseptic or substantially aseptic dairy liquid comprising about 6 to about 26 percent protein (preferably about 9 to about 26 percent protein, and more preferably about 9 to about 15 percent protein), about 0 to about 26 percent fat, and about 40 to about 85 percent water. In a preferred embodiment, the aseptic or substantially aseptic dairy liquid consists essentially of the above proteins, fat, and water. The dairy liquid may also contain insubstantial amounts of lactose and other dairy solids (such as less than about 5 percent lactose and less than about 3 other dairy solids). For purposes herein, an "aseptic or substantially aseptic dairy liquid" means a dairy liquid, such as dairy milk, which is expected to be stable and non-gelling at cold or ambient temperatures (i.e., about 70°F) for at least about 6 months, which has at least a four-log reduction in bacteria, as measured relative to the initial bacterial load (i.e., in the starting dairy liquid or the UF dairy liquid, whichever is larger), and which has less than about 5 colony forming units of spore bacteria per gram. Preferably, the aseptic or substantially aseptic dairy liquid has at least a seven-log reduction in bacterial and less than 1 colony forming units of spore forming bacteria per gram. The aseptic or substantially aseptic dairy liquid also does not require exposure to significant heat treatment to achieve such aseptic conditions.

The aseptic or substantially aseptic dairy liquid produced herein preferably is substantially free of stabilizers or other additives normally used to stabilize concentrated dairy liquids. However, other ingredients (such as, but not limited to, sweeteners, flavors, colors, and the like) may be added if desired to improve the flavor, taste, texture, or other properties of the dairy liquid depending on the particular use or application thereof.

### BRIEF DESCRIPTION OF THE DRAWING

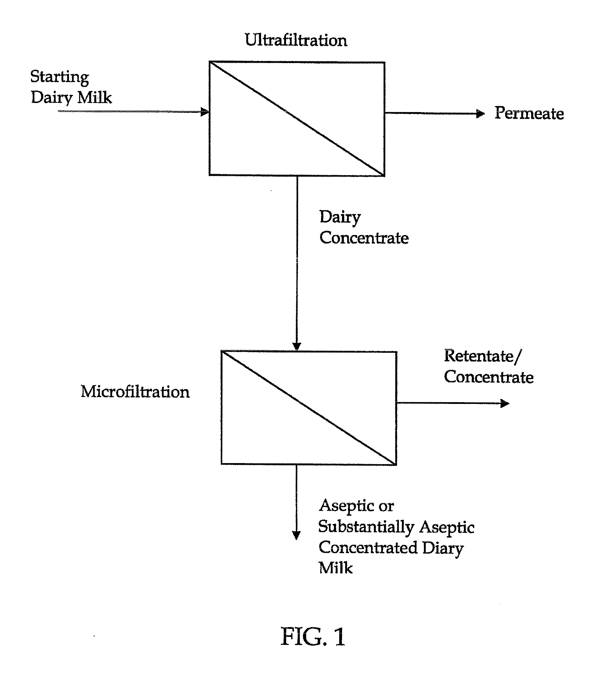

FIG. 1 is a general flowchart of the process of the present invention.

### DETAILED DESCRIPTION OF PREFERRED EMBODIMENTS

A method is provided for forming aseptic or substantially aseptic concentrated dairy milk without significant heat treatment. In one form, the method includes first concentrating a starting dairy milk using ultrafiltration techniques with or without diafiltration to form concentrated dairy milk having about 2X to about 7X concentration in terms of milk protein and, preferably, about 3X to about 7X concentration. The concentrated dairy milk is then subjected to microfiltration techniques to substantially remove bacteria and microbial spores to provide the aseptic or substantially aseptic concentrated milk.

The resultant permeate from the microfiltration process, which is the aseptic or substantially aseptic concentrated milk, preferably includes about 95 to about 97 percent of the protein and about 95 to about 97 percent of the casein provided in the starting dairy milk. It generally has at least a four-log, and preferably at least a seven-log reduction in bacteria as compared to the starting dairy liquid (i.e., prior to UF) or the UF dairy liquid (whichever is higher) and contains less than about 5 cfu/g (colony forming units/gram) of bacteria and other undesired microbes and, preferably, less than about 1 cfu/g. Hereinafter and unless otherwise noted, "aseptic" is intended to mean aseptic or substantially aseptic. Therefore, significant heat treatments are not required, and not used. The aseptic or substantially aseptic product can be packaged or processed further in a sterilized environment.

As used herein, "significant heat treatment" means the dairy milk is not subjected to heat treatment during processing over about 250°F for more than about 5 minutes and preferably not more than about 1 minute. Even more preferably, the dairy milk is not subjected to heat treatments during processing over about 180°F for more than about 10 minutes, preferably not more than about 5 minutes, and more preferably not more than about 1 minute. In addition, "dairy milk" means a dairy liquid originating from any lactating livestock animal whose milk is useful as a source of human food. Such livestock animals includes, by way of non-limiting example, cows, buffalos, other ruminates, goats, sheep, and the like. Generally, however, cow's milk is the preferred source of dairy milk. Most preferably, the dairy milk is a low-fat milk or skim milk, which means a milk product having less than 0.2 percent milk fat. Alternatively, the methods described herein could also be used with soy milk. For purposes herein, the concentration factor is calculated by dividing the protein level of the concentrated milk by the protein level of the starting milk. For example, a starting milk with about 3 percent protein that is concentrated to about 6 percent protein has about a 2X concentration factor.

It has been discovered that the order of filtration, and in particular, first ultrafiltrating to concentrate milk protein and second microfiltrating to remove bacteria, can effectively provide aseptic concentrated milk that does not require significant heat treatment to achieve such aseptic conditions and stability. This order of filtration is distinct from traditional filtration techniques because the milk is concentrated by ultrafiltration (smaller membrane) prior to sterilization by microfiltration (larger membrane), which is opposite accepted practice as discussed in the background. The methods described herein, on the other hand, provide aseptic 2X to 7X concentrated milk without resorting to significant heat treatment that would adversely affect the stability of the concentrated milk.

By one approach, the aseptic concentrated milk produced by the methods herein is sufficiently stable and sterile without further heat treatment and additives such that it can be used in a fermentation process to produce a "sulfury-cheddar" flavor component using *Brevibacterium linens* at its optimal conditions of pH 7.0 and temperatures of about 86 to about 95°F. In other words, the methods herein provide an aseptic 2X to 7X milk concentrate that preferably does not include additives or stabilizers that would interfere with the optimal fermentation conditions of *Brevibacterium linens.* If desired, prior to fermentation, the concentrated milk may optionally be pasteurized, homogenized, have fat added or removed, and/or have other ingredients added as desired. For example, the concentrated milk prepared by the methods herein may be combined with UHT treated cream, methionine (e.g., about 0.2 percent) and *Brevibacterium linens* (e.g., about 1×10⁸) from a DVS (Direct vat set) form. The mixture may then be incubated at about 25°C aerobically by shaking the flasks at 150 rpm to allow the fermentation to proceed. Examples of such fermentation methods are provided in U.S. Patent Application Number 11/394,754 (filed March 31, 2006), which is hereby incorporated herein by reference in its entirety.

By using the methods described herein to provide milk concentrate for the fermentation with *Brevibacterium linens,* it is not required to use lactic acid cultures to lower the pH. The pH is actually elevated to 7.0 to 7.5 to enhance the *Brevibacterium linens* performance. With the increased pH (and increased fat), increased levels of the desired methanethiol, DMDS, and DMTS are produced.

By another approach, it is expected that the aseptic concentrated milk produced by the methods herein is also sufficiently stable and sterile without significant heat treatment such that it may be used in cartridges or pods designed for on-demand beverage preparation machines, such as those described in U.S. Patent Application Number 10/763, 680 (filed January 23, 2004), which is hereby incorporated herein by reference in its entirety. Of course, the aseptic concentrated milk described herein can be used for many other purposes and/or used in many other applications.

It is anticipated that milk concentrated by the methods herein will have a shelf life of at least about 6 months, and preferably about 9 to about 18 months. For purposes herein, "shelf life" means the period of time at which a dairy product can be stored at ambient temperature (i.e., about 70°F) without developing an objectionable organoleptic characteristic, such as an objectionable aroma, appearance, taste, consistency, or mouthfeel. In addition, an organoleptically acceptable dairy product at a given shelf life will have no significant off-odor, off-flavor, or off-coloring (i.e., browning), will not have a clumped, ropy, or slippery texture, and will remain ungelled. "Stable" or "shelf-stable" also means that the dairy product at a given time does not have objectionable organoleptic characteristics as defined above and is organoleptically acceptable.

As shown in Figure 1, the aseptic or substantially aseptic concentrated milk is prepared by first concentrating a starting dairy milk (preferably a skim milk) using ultrafiltration (UF) with or without diafiltration to form a liquid dairy concentrate (i.e., the retentate). The liquid dairy concentrate is then treated using microfiltration to remove bacteria and/or bacterial spores. The aseptic or substantially aseptic concentrated milk is then collected as the permeate from the microfiltration unit.

UF is a membrane separation technique that is primarily used to separate extremely small particles and dissolved molecules in fluids, and is well suited to concentrate solids in a liquid. In UF, the main basis for separation is molecular size, although other factors may also play a factor. In one form, a UF membrane having a MWCO ranging from about 1,000 to about 1,000,000 is employed to concentrate a starting skim milk having about 3.0 to about 3.8 percent protein into a dairy concentrate having about 6 to about 26 protein (i.e., about 2X to about 7X concentration based on total protein level). Such a UF membrane is sufficient to retain milk proteins, bacteria, microbial spores, fat micelles in the dairy concentrate and allow solvent (water), smaller molecules, mineral salts, and lactose to pass through the membrane into a permeate. Optionally, diafiltration may also be employed along with the ultrafiltration. In this case, diafiltration can be used to wash larger quantities of lactose into the UF permeate so that the UF retentate has lower amounts of lactose. For example, without diafiltration, the amount of lactose in the UF permeate and UF retentate is generally about the same. With diafiltration, on the other hand, the amount of lactose in the UF retentate can be reduced to about 0.1 percent. Such levels of lactose may be advantageous in subsequent fermentations that are sensitive to lactose. In other applications, such levels of lactose are generally desired to minimize browning and/or unwanted flavors.

In a particularly preferred form, treatment of the dairy liquid using UF with or without diafitration will provide a retentate or dairy concentrate having the following properties.

**Table 1**

| Composition | Retentate | |
|---|---|---|
| | UF, % | UF with Diafiltration, % |
| Protein | 6 to 26 | 6 to 26 |
| Fat | 0 to 26 | 0 to 26 |
| Lactose | 2 to 5 | 0.1 to 5 |

In an exemplary form, it is expected that the UF filtration unit will provide a retentate as described above with a flux rate of about 9 to about 11 m³/m²h, with pressures of about 25 to about 35 psi, and at temperatures of about 40 to about 125°F (preferably, about 115 to about 125°F). Of course, other conditions are also possible depending on the UF membrane, filtration unit, the materials being filtered, and other factors.

After ultrafiltration, the 2X to 7X UF dairy concentrate or retentate may be contaminated or recontaminated with unwanted bacteria and/or bacterial spores. As discussed in the background, the UF membrane cannot be sterilized and, thus, may contaminate or re-contaminate the concentrated product. Traditionally, the UF concentrated milk would simply be subjected to significant heat treatment; however, as also discussed in the background, such heat treatments commonly result in unwanted protein denaturation, coagulation, gelling, browning, or precipitation of the protein. The methods herein, on the other hand, employ microfiltration after ultrafiltration to remove unwanted bacteria and, thus, avoid the further use of significant heat treatments.

The dairy concentrate (i.e., the UF retentate/concentrate) from the UF system is fed to a microfiltration (MF) membrane having a pore size less than about 10 microns, preferably about 1 to about 2 microns, and most preferably about 1.4 microns. MF membranes above this range would generally allow bacteria to pass, and membranes below this range would result in the rejection of fat and/or protein. Preferably, the MF membrane is operated at about 40 to about 180°F (preferably, about 120°F to about 150°F) and about 20-30 psig; however, other conditions may be used depending on the application. This size membrane is sufficient to remove undesired bacteria and spores in the MF retentate and still allow sufficient amounts of the proteins and fat to pass through the membrane in the MF permeate. Typically, treatment of the UF diary liquid (with or with diafiltration) using microfiltration will provide a MF permeate/filtrate (i.e., the substantially aseptic concentrated milk) having the compositions of Table 2 below. The MF concentrate/retentate from the microfiltration unit will contain removed bacteria and/or bacterial spores and will generally be treated as a waste stream; generally this waste stream with be less than about 5 percent of the total starting dairy liquid.

**Table 2**

| Composition | Permeate/Filtrate |
|---|---|
| Protein | 6 to 26 |
| Fat | 0 to 26 |
| Lactose | 0.1 to 5 |

Such a process, which first uses ultrafiltration and then microfiltration, provides a permeate from the microfiltration system (i.e., the aseptic or substantially aseptic concentrated milk) that includes about 95 to about 97 percent of the protein and about 95 to about 97 percent of the casein that is provided in the original, unfiltered skim milk. In addition, the MF permeate preferably exhibits about a four-log reduction in total bacteria so that the aseptic concentrated milk has less than 5 cfu/gram of spore forming bacteria, preferably less than 2 cfu/gram, and most preferably less than 1 cfu/gram.

In a preferred use, the aseptic concentrated milk formed herein is used to produce natural biogenerated cheese flavors or cultured cheese concentrates ("CCC's) as described in, for example, U.S. Patent No. 6,562,383, U.S. Patent Publication No. 2005/0112238 A1, and U.S. Patent Application No. 11/394,754 (filed March 31, 2006), all of which are hereby incorporated by reference. These CCC's can be used to prepare cheeses having desired flavor profiles in a shorted period of time because lengthy cure periods are not needed. Theses cultured cheese concentrates are prepared from the aseptic concentrated milk using enzymes, cultures, additives, and certain process conditions designed to provide specific flavor components having particular flavor profiles or characteristics. It will be appreciated by one skilled in the art, however, that such use of the aseptic concentrated milk is only intended as but one exemplary use of the resultant milk concentrate and it is not intended to limit the methods described herein or the resultant aseptic concentrated milk to such use.

In a particularly preferred example, the aseptic concentrated milk is fermented using *Brevibacterium linens* to form a "sulfury-cheddar" flavor component, which exhibits strong sulfur notes. This suflury-cheddar component may be used alone with a cheese base to provide sharp cheddar flavor notes in a cheese without a lengthy cure process. The aseptic concentrated milk prepared by the filtration methods described above is preferred because it provides an intermediate dairy concentrate that is microbiologically stable without the use of stabilizers, additives, or significant heat treatment that allows a sterile fermentation to occur using *Brevibacterium linens* at its optimal conditions of pH of about 5.5 to about 8.0 (preferably about pH 7.0) and temperatures of about 86 to about 95°F. Because these conditions are favorable for the growth of bacteria and other spores, the aseptic concentrated milk is particularly useful because it permits a sterile fermentation to proceed at such conditions without resulting to the unwanted heat treatments or additives described in the Background Of The Invention.

Although not wishing to be limited by theory, the use of *Brevibacterium linens* at its optimal conditions appears to effectively produce large amounts of methanethiol, which oxidizes into dimethyl disulfide (DMDS) and dimethyl trisulfide (DMTS). These volatile sulfur compounds comprise important fractions of the flavor profiles in cheddar cheeses and, more particularly, the strong flavor notes in sharp cheddar cheeses.

In a particularly preferred for The Examples that follow are intended to illustrate, and not to limit, the invention. All percentages used herein are by weight, unless otherwise indicated.

### EXAMPLES

**Example 1**. Skim milk (Elgin Dairy, Illinois) (about 3.2 percent protein, about 2.5 percent lactose, and less than about 0.1 percent fat) was concentrated using an ultrafiltration membrane (NCSRT, Inc., North Carolina) with a 10,000 MWCO with diafiltration at 120°F to produce about 4.4X dairy concentrate/retentate having about 14 percent protein, 1.5 percent lactose, and 2 percent fat. Ultrafiltration occurred at 25-35 psig and at 115-125°F. After ultrafiltration, the dairy concentrate had about 1.2×10⁴ colony forming units per gram (cfu/g) of microbial spores.

The 4.4X dairy concentrate was then passed through a microfiltration membrane having an average pore size of about 1.4 microns (Membralox Filter, Pall Corporation, NY) at about 120°F and about 20-30 psig. About 80 pounds of the dairy concentrate was filtered using the microfiltration membrane, which resulted in about 75 pounds of permeate (aseptic concentrated dairy milk) and about 5 pounds of retentate. The permeate had about 14 percent protein, about 1.5 percent lactose, and about 2 percent fat to produce about a 4.4X milk concentrate (i.e., 14 percent protein in the concentrate divided by 3.2 percent protein in the starting milk). The permeate had about 95 percent of the protein in the starting dairy liquid.

Permeate samples from the microfiltration unit were cultured and screened for total number of contaminating bacteria, spore forming bacteria, and colliform bacteria. Bacteria levels were determined using standard microbiological visual measuring techniques, such as either plating a 1 gram aliquote of the permeate, or through serial dilution techniques where an 11 gram aliquote sample of the permeate was serially diluted by about 10X with sterile saline. Each sample was plated on blood agar and incubated at 37°F for 24 hours. The incubated sample was then read for bacterial growth by visually counting the bacteria growth. The permeate exhibited about a four-log reduction in total bacterial count after the microfiltration as compared to before microfiltration, and the total spore-forming bacteria were reduced to less than about 1 cfu/g.

**Example 2**. Skim milk was concentrated as provided in Example 1. The level of microbial contamination was measured before and after the microfiltration using the procedure of Example 1. The results are provided in Table 3 below. The results illustrate that concentrating the milk prior to microfiltration forms concentrated dairy milk that does not require significant heat treatment prior to subsequent use.

**Table 3**

| **Sample** | **Total Bacterial Count (CFU/G)** |
|---|---|
| Skim milk before UF | 150 |
| 5X milk concentrate after UF but before MF | 1.2X10⁴ |
| 5X milk permeate after MF at start up | <1 |
| 5X milk permeate after MF at steady state | 2 |
| 5X milk permeate after MF at shut down | <1 |

**Comparative Example**. The level of bacterial contamination was measured in a traditional staged filtration process to form concentrated milk. This traditional process first microfiltered dairy milk (MF filter with a 1.4 micron pore) and then ultrafiltered the milk (MWCO of about 10,000) to form about a 5X concentrate. The level of bacterial contamination after each filtration step is provided in Table 4 below and measured using the procedures of Example 1.

**Table 4**

| **Sample description** | **Total Bacteria Count (CFU/G)** |
|---|---|
| Skim milk before MF | 150 |
| Skim milk immediately after MF | <5 |
| Skim milk 1 hour after MF | <5 |
| Skim milk 2 hours after MF | <5 |
| 5X milk after UF/DF | 1.5x10⁴ |

Using the traditional order of removing bacteria before concentration resulted in 5X concentrated milk that was significantly contaminated. Therefore, subsequent sterilization using significant heat treatments (e.g., UHT, retorting, and the like) would be needed prior to using the 5X milk in a fermentation process or other subsequent processing. UHT treatment of this milk would result in coagulation or other undesired effects rendering it unsuitable for fermentation processes or other uses.

It will be understood that various changes in the details, materials, and arrangements of formulations and ingredients, which have been herein described and illustrated, in order to explain the nature of the method, may be made by those skilled in the art within the principle and scope of the embodied method as expressed in the appended claims. Furthermore, the figure generally illustrates generic filtration units, which can be single stage, multistage, multi-pass, or other accepted filtration-like systems.

## Claims

1. A method of providing a substantially aseptic concentrated dairy liquid without significant heat treatment, the method comprising:
providing a starting dairy liquid with about 3 to about 3.8 percent protein;
concentrating the starting dairy liquid to about 2X to about 7X concentration using a ultrafiltration membrane to provide a dairy concentrate having about 6 to about 26 percent protein;
filtering the dairy concentrate using a microfiltration membrane to provide the substantially aseptic concentrated dairy liquid comprising about 6 to about 26 percent protein; and
wherein the substantially aseptic concentrated dairy liquid has at least a four-log reduction in total bacteria and less than about 5 colony forming units of spore forming bacteria per gram; and
wherein the substantially aseptic concentrated dairy liquid is not subjected to significant heat treatment.

2. The method of claim 1, wherein the substantially aseptic concentrated dairy liquid is substantially free of additives and stabilizers to enhance the stability of the substantially aseptic concentrated dairy liquid.

3. The method of claim 1 or 2, wherein the substantially aseptic concentrated dairy liquid includes about 95 to about 97 percent of the protein from the starting dairy liquid.

4. The method of any one of claims 1 to 3, wherein the ultrafiltration membrane has a MWCO of about 1,000 to about 1,000,000.

5. The method of any one of claims 1 to 4, wherein the microfiltration membrane has a pore size of about 1 to about 10 microns.

6. The method of any one of claims 1 to 5, wherein the starting dairy liquid has less than about 0.2 percent fat.

7. The method of claim 6, wherein the substantially aseptic concentrated dairy liquid has greater than about 9 percent protein.

8. The method of any one of claims 1 to 7, further comprising diafiltering the starting dairy liquid so that the dairy concentrate has less than about 3 percent lactose.

9. The method of any one of claims 1 to 8, wherein the substantially aseptic concentrated dairy liquid has less than about 1 colony forming unit of spore forming bacteria per gram.

10. The method of any one of claims 1 to 9, further comprising fermenting the substantially aseptic concentrated dairy liquid using *Brevibacterium linens* at about pH 5.5 to about 8.0 and at about 86 to about 95°F to form a flavor component having sulfur flavor notes.

11. The method of any one of claims 1 to 10, wherein the starting dairy liquid is dairy milk.

12. A substantially aseptic concentrated dairy liquid comprising:
about 9 to about 26 percent protein;
about 0 to about 26 percent fat;
about 40 to about 85 percent water;
wherein the substantially aseptic concentrated dairy liquid is prepared from a starting dairy liquid, wherein the substantially aseptic concentrated dairy liquid has at least a four-log reduction in total bacteria relative to the starting dairy liquid, wherein the substantially aseptic concentrated dairy liquid has less than about 5 colony forming units of spore forming bacteria per gram, and wherein the substantially aseptic concentrated dairy liquid is prepared without exposure to significant heat treatment.

13. The substantially aseptic concentrated dairy liquid of claim 12, wherein the substantially aseptic dairy liquid is free of additives or stabilizers to enhance the stability of the substantially aseptic concentrated dairy liquid.

14. The substantially aseptic concentrated dairy liquid of claim 12 or 13, wherein the substantially aseptic dairy liquid includes about 9 to about 15 percent protein.

15. The substantially aseptic concentrated dairy liquid of any one of claims 12 to 14, wherein the substantially aseptic concentrated dairy liquid contains less than about 1 colony forming units of spore forming bacteria per gram.

16. A substantially aseptic concentrated dairy milk produced from the method of any one of claims 1 to 11.

17. The substantially aseptic concentrated dairy milk of claim 16, wherein the concentrating the starting dairy milk is about 40 to about 125°F.

18. The substantially aseptic concentrated dairy milk of claim 16, wherein the filtering the dairy concentrate is at about 40 to about 180°F.
